# EUROPÄISCHE PATENTSCHRIFT

(11) **EP 2 745 952 B1**
(45) Veröffentlichungstag und Bekanntmachung des Hinweises auf die Patenterteilung: **25.07.2018**
(21) Anmeldenummer: 13005825.8
(22) Anmeldetag: 13.12.2013
(51) Int. Cl.: B21F 33/00, B23D 23/00

(54) **Vorrichtung und Verfahren zum Durchtrennen von Gitterrosten**
Device and method for cutting through gratings
Dispositifs et procédé de séparation de caillebotis

(30) Priorität: 19.12.2012 AT 13132012
(43) Veröffentlichungstag der Anmeldung: 25.06.2014
(73) Patentinhaber: GitterStar GmbH & Co. KG, 48282 Emsdetten (DE)
(72) Erfinder: MARTIN, Kevin, 48432 Rheine (DE)
(74) Vertreter: Tschinder, Thomas

(56) Entgegenhaltungen:
- EP-A1- 0 094 929
- EP-A1- 0 478 530
- AT-B- 356 481

## Beschreibung

Die Erfindung betrifft eine Vorrichtung zum Zuschneiden von Gitterrosten, im Speziellen betrifft sie eine Trennvorrichtung zum Durchtrennen der Tragstäbe eines Gitterrostes. Die Trennvorrichtung weist dabei ein Trennmesser mit kammartigen Schneidezähnen auf, deren Schneidflanken in Bezug zur Gitterrostebene schräg verlaufen, sodass die Schneidezähne an ihrer Basis breiter sind als an ihrer Spitze.
Die Erfindung betrifft auch ein Verfahren zum Durchtrennen von Gitterrosten.

Gitterroste werden in der Regel aus Stahl, verzinktem Stahl, Edelstahl oder aus Aluminium gefertigt. Sie bestehen normalerweise aus Tragstäben und aus Querstäben. Als Tragstäbe bzw. als Längsstäbe werden die die Belastung tragenden, parallel zueinander liegenden Stäbe zwischen zwei Rostauflagen bezeichnet. Als Querstäbe werden die Verbindungsstäbe quer zu den Tragstäben bezeichnet. Die Querstäbe sind an den Kreuzungsstellen mit den Tragstäben verpresst (bei Pressrosten) bzw. verschweißt (bei Schweißpressrosten). Die Querstäbe sind dabei meist erheblich schmaler (weniger hoch) dimensioniert als die Tragstäbe. Im Rahmen dieser Erfindung sollen aber auch sogenannte Vollroste unter dem Begriff Gitterroste verstanden werden. Bei Vollrosten sind die Tragstäbe und die Querstäbe gleich hoch.

Zum Durchtrennen eines Gitterrostes kann beispielsweise ein Trennschleifer oder eine Säge verwendet werden. Ein derartiges Trennverfahren ist jedoch kostenintensiv und unwirtschaftlich, weil die Scheibe des Trennschleifers bzw. das Sägeblatt häufig erneuert werden muss. Dadurch wird der Produktionsablauf häufig unterbrochen. Außerdem entsteht beim Trennvorgang ein unangenehm hoher Lärm, der zum Teil sogar im unzulässigen Bereich liegt.
Zum Schneiden der Längsstäbe (Tragstäbe) eines Gitterrostes kann auch ein Bolzenschneider verwendet werden. Dieser muss jedoch von Hand an das Werkstück herangeführt werden und jeder Tragstab muss einzeln durchtrennt werden. Für ein automatisiertes Schneidwerkzeug sind Bolzenschneider erfahrungsgemäß nicht geeignet.

Es existieren bereits Veröffentlichungen, die sich mit den beim Schneiden eines Gitterrostes auftretenden Problemen befassen und die ein eingangs erwähntes Trennmesser mit Schneidezähnen aufweisen. Aus der AT356481 B ist beispielsweise eine Anlage bekannt, die zum Durchtrennen der Tragstäbe einen quer zur Zuführrichtung verlaufenden Führungsbalken und einen entlang der Schnittebene in horizontaler Richtung relativ zum Führungsbalken bewegbaren Messerbalken aufweist. Der Führungsbalken und der Messerbalken haben kammartige Schneidezähne. Alle Tragstäbe werden dabei gleichzeitig durchtrennt, um die Verbiegung der Endmasche so gering wie möglich zu halten. In der Praxis kommt es dennoch zu Verformungen der Tragstäbe an der Schnittkante. Eine Schneidanlage gemäß der AT356481 B hat zumindest drei entscheidende Nachteile. Erstens werden die Schneidezähne einseitig belastet, wodurch die Schneidezähne verbogen werden oder ausbrechen können. Außerdem muss durch das gleichzeitige Scheren aller Tragstäbe (Längsstäbe) über den gesamten Querschnitt die Trennvorrichtung große Kräfte aushalten und dementsprechend massiv dimensioniert werden.

Letztlich können derartige Maschinen aus einer fertigen Matte auch keine beliebige Randmasche fertigen. Beide Schneidelemente (Führungsbalken und Messerbalken) müssen gänzlich in eine einzige Maschenreihe eintauchen, um die Tragstäbe scheren zu können. Der Schnitt kann daher nicht beliebig nahe an den Querstäben durchgeführt werden. Eine ähnliche Schneidvorrichtung beschreibt die EP0478530A1. Das Schnittprinzip ist das gleiche wie in der AT356481 B. Die Vorrichtung in der EP0478530A1 wurde jedoch um Haltebalken mit kammartigen Zähnen erweitert, welche kurz vor dem Schneiden in die Zahnlücken des Messer- und des Führungsbalkens hineinfahren. Das geschilderte Vorgehen löst augenscheinlich die Problematik der großen Querkräfte auf die Zähne der Schneidbalken. Dadurch wird das Risiko des Herausbrechens der Zähne reduziert. Die anderen genannten Probleme beim Schneiden eines Gitterrostes bleiben dennoch bestehen.

Der Erfindung liegt daher die Aufgabe zugrunde, eine Schneidvorrichtung der einleitend angegebenen Art zu schaffen, die einerseits die Lärmbelastung für das Bedienungspersonal reduzieren soll und bei der gleichzeitig die Gefahr einer Verformung bzw. Beschädigung der Schneidwerkzeuge beim Schnitt unter der Wirkung der auftretenden Scherkräfte vermieden werden soll. Außerdem sollen mit der erfindungsgemäßen Trennvorrichtung die Tragstäbe herkömmlicher Gitterroste, also Gitterroste bei denen die Querstäbe erheblich niedriger als die Tragstäbe sind, an beliebiger Stelle durchtrennt werden können, insbesondere auch an den Punkten, an denen sich die Tragstäbe und die Querstäbe kreuzen. Mit der erfindungsgemäßen Trennvorrichtung sollen also vorzugsweise beliebig vorgegebene Randmaschen geschnitten werden können. Gelöst wird diese Aufgabe durch eine Vorrichtung gemäß Patentanspruch 1. Die Erfindung ist also dadurch gekennzeichnet, dass beidseitig des Trennmessers Vorlaufmesser mit kammartigen Schneidezähnen und dazwischen angeordneten Zahnlücken zur Aufnahme der Tragstäbe angeordnet sind. Dem Trennmesser gegenüberliegend befindet sich ein Gegenhalter, sodass der Gitterrost zwischen Trennmesser und Gegenhalter hineingeschoben werden kann. Zum Durchtrennen der Tragstäbe können die beiden Vorlaufmesser in eine Richtung senkrecht zur Gitterrostebene hin bewegt werden, und zwar so, dass die Tragstäbe in die Zahnlücken der Vorlaufmesser hineingleiten. Das Trennmesser kann dann nachfolgend ebenfalls in eine Richtung senkrecht zur Gitterrostebene hin bewegt werden, sodass die Schneidezähne des Trennmessers mit den Schneidezähnen der beiden Vorlaufmesser scherenartig zusammenwirken. Dadurch wird jeweils ein schmales Teilstück aus den Tragstäben herausgeschält und die Tragstäbe werden so durchtrennt. Der Gegenhalter verhindert beim Schnitt ein Zurückweichen des Gitterrostes.
Bei der Erfindung werden die Schnittkräfte im Gegensatz zum Stand der Technik vertikal (z.B. von oben nach unten) in das Werkstück eingebracht. Weil die Schneidezähne des Trennmessers beidseitig belastet werden, neutralisieren sich die auf die Zähne wirkenden Scherkräfte (Querkräfte). Dadurch wird im Wesentlichen verhindert, dass die Schneidezähne herausbrechen. Die Lärmbelastung beim Schneiden wird durch die Erfindung ebenso reduziert.
Bei herkömmlichen Gitterrosten können die Tragstäbe mit dieser Vorrichtung an beliebiger Stelle durchtrennt werden, z.B. auch an den Kreuzungspunkten mit den Querstäben. Wie dies erfolgt, wird in den Ausführungsbeispielen weiter unten genauer beschrieben.

Vollroste können mit der erfindungsgemäßen Vorrichtung auch durchtrennt werden, jedoch können bei diesem Rosttyp die Tragstäbe nicht an beliebiger Stelle durchtrennt werden, da zum Durchtrennen beide Vorlaufmesser und das Trennmesser in den Vollrost eintauchen können müssen.

Mit der erfindungsgemäßen Trennvorrichtung können sowohl gepresste als auch geschweißte Gitterroste durchtrennt werden.

Es ist günstig, wenn die Vorlaufmesser an Messerblöcken befestigt sind.

Es ist auch vorteilhaft, wenn die jeweilige Senkrechte auf die Schneidflanken der Schneidezähne des Trennmessers in Bezug auf eine Senkrechte zur Trennmesserebene nicht senkrecht sondern schräg verläuft. Unter der Trennmesserebene wird die Schnittebene verstanden. Dadurch kann erreicht werden, dass sich das jeweils herausgeschälte Teilstück beim Schnitt verdreht. Das Risiko, dass sich die Teilstücke in der Trennvorrichtung verklemmen, wird so verringert.

In einer günstigen Ausführungsform der Erfindung sind an den Messerblöcken der Vorlaufmesser Anschlagelemente vorgesehen, die während des Trennvorgangs durch Ausnehmungen im Gegenhalter fixiert werden.
Durch die Fixierung der Anschlagelemente wird gewährleistet, dass die Vorlaufmesser eng am Trennmesser anliegen, sodass eine gute Schnittwirkung erzielt wird. Vorzugsweise erstrecken sich die Vorlaufmesser und das Trennmesser über die gesamte Gitterrostbreite, sodass mit einem Schnitt der gesamte Gitterrost durchtrennt werden kann.

Gegenstand der Erfindung bildet auch ein entsprechendes Verfahren zum Durchtrennen zueinander paralleler Tragstäbe eines Gitterrostes mit einer Vorrichtung nach einem der Ansprüche 1 bis 4. In einem ersten Schritt des Verfahrens werden die beiden Vorlaufmesser in eine Richtung senkrecht zur Gitterrostebene in den Gitterrost hineinbewegt, sodass die Zahnlücken der Vorlaufmesser die Tragstäbe zumindest teilweise aufnehmen. In einem zweiten Schritt wird auch das Trennmesser in eine Richtung senkrecht zur Gitterrostebene in den Gitterrost hineinbewegt. Dabei wirken die Schneidezähne des Trennmessers mit den Schneidezähnen der beiden Vorlaufmesser scherenartig zusammen, sodass dadurch aus den einzelnen Tragstäben jeweils ein der Breite des Trennmessers entsprechendes Teilstück mit einem Doppelschnitt herausgeschält bzw. herausgeschnitten wird.

Es ist günstig, wenn die Vorlaufmesser an Messerblöcken befestigt sind, wobei die Messerblöcke ebenfalls Zahnlücken aufweisen. Die Breite der Zahnlücken entspricht dabei im Wesentlichen der Breite der zu durchtrennenden Tragstäbe. Die Tragstäbe werden dadurch beim Schnitt durch die Zähne der Messerblöcke fixiert.

Es ist sinnvoll, wenn die Breite der Schneidezähne der Vorlaufmesser im Wesentlichen der Maschenweite des Gitterrostes entspricht, dadurch liegen die Tragstäbe beim Schnitt eng an den Schneidezähnen der Vorlaufmesser an. So kann eine Verformung der Tragstäbe beim Schnitt vermieden werden. Die Schneidezähne der beiden Vorlaufmesser brauchen dabei jeweils nur in jede zweite Masche des Gitterrostes eingeführt werden und zwar in genau jene Maschen, die zwischen den Schneidezähnen des Trennmessers liegen.

Es günstig, wenn der Gitterrost über einen Rollengang der Trennvorrichtung zugeführt wird und wenn die Schneidbewegung der Messer in vertikaler Richtung von oben nach unten durchgeführt wird. Die Teilstücke können dann nach unten fallen und das Risiko, dass sich die Teile zwischen den Messern verklemmen wird reduziert.
Der Trennvorgang könnte aber auch mit einer Schnittbewegung von unten nach oben erfolgen.

Mit dem erfindungsgemäßen Trennverfahren können die Tragstäbe herkömmlicher Gitterroste auch genau an den Kreuzungspunkten durchtrennt werden, sodass der an den Kreuzungspunkten liegende Querstab durch das Trennmesser aus dem Gitterrost herausgetrennt bzw. herausgedrückt wird. Unter herkömmlichen Gitterrosten sollen Roste verstanden werden, bei denen die Tragstäbe erheblich höher als die Querstäbe sind.

Vorteilhafterweise werden die Vorlaufmesser und das Trennmesser mit Hilfe von Arbeitszylindern, beispielsweise mit Hydraulikzylindern, in den Gitterrost hineinbewegt.

Die Vorlaufmesser können vorzugsweise unabhängig voneinander mit druckbegrenzten Hydraulikzylindern nach unten gedrückt werden. Dadurch kann erreicht werden, das ein Vorlaufmesser, wenn es direkt über einem Querstab zum liegen kommt, nicht versucht, tiefer in den Gitterrost zu gleiten.

Im Folgenden wird die Erfindung anhand von Zeichnungen beschrieben. Es zeigen:
Fig. 1 eine schematische Seitenansicht der erfindungsgemäßen Trennvorrichtung;
Fig. 2 eine schematische Vorderansicht der Trennvorrichtung aus Fig. 1;
Fig. 2a eine Einzeldarstellung des Trennmessers aus Fig. 2;
Fig. 2b eine Detailansicht der Messer vor und nach dem Schnitt der Tragstäbe;
Fig. 3 eine geschnittene Draufsicht entlang der Linie A-A in Fig. 2;
Fig. 4 eine schematische Seitenansicht einer erfindungsgemäßen Trennvorrichtung in Grundstellung mit einem ähnlichen Aufbau wie die Trennvorrichtung in Fig. 1;
Fig. 5a, Fig. 5b, Fig. 6a und Fig. 6b die jeweilige Position der Vorlaufmesser und des Trennmessers während eines Schneidvorganges;

Gleiche Bezugszeichen in den jeweiligen Figuren bezeichnen jeweils die gleichen Bauteile.

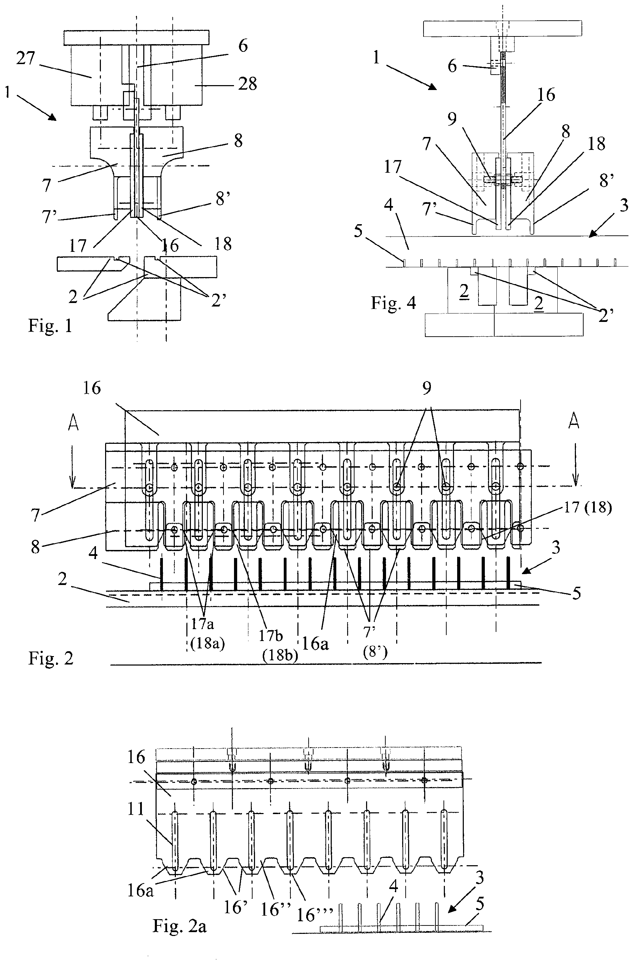

In Figur 1 ist eine Ausführungsform der erfindungsgemäßen Trennvorrichtung 1 dargestellt. Das Trennmesser 16 und die beiden Vorlaufmesser 17 und 18 sind an jeweiligen Messerblöcken 6, 7 und 8 befestigt. Unterhalb der Messer 16, 17 und 18 befindet sich ein Gegenhalter 2, hier in Form einer Gitterrostauflage zur Aufnahme eines Gitterrostes 3 (in Fig. 1 nicht dargestellt). Die beiden Messerblöcke 7 und 8 der Vorlaufmesser 17 und 18 sind an ihrem unteren Ende kammartig ausgeführt und sie weisen Anschlagelemente 7' und 8' auf. Die Zahnlücken der Messerblöcke 7 und 8 dienen der Aufnahme der Tragstäbe 4. Gegenüber der Anschlagelemente 7' und 8' befinden sich Ausnehmungen 2' im Gegenhalter 2. Wenn die Vorlaufmesser 17 und 18 für den Schneidvorgang abgesenkt sind, sind die Anschlagelemente 7' und 8' in den Ausnehmungen 2' fixiert. Dadurch wird die Position der Vorlaufmesser 17 und 18 festgelegt. Die beiden Messerblöcke 7, 8 mit den Vorlaufmessern 17, 18 werden vor einem Schnitt durch die Hydraulikzylinder 27 und 28 abgesenkt. Danach wird zum Schnitt des Gitterrostes 3 der Messerblock 6 mit dem Trennmesser 16 ebenfalls über einen Arbeitszylinder (in Fig. 1 nicht dargestellt) abgesenkt.

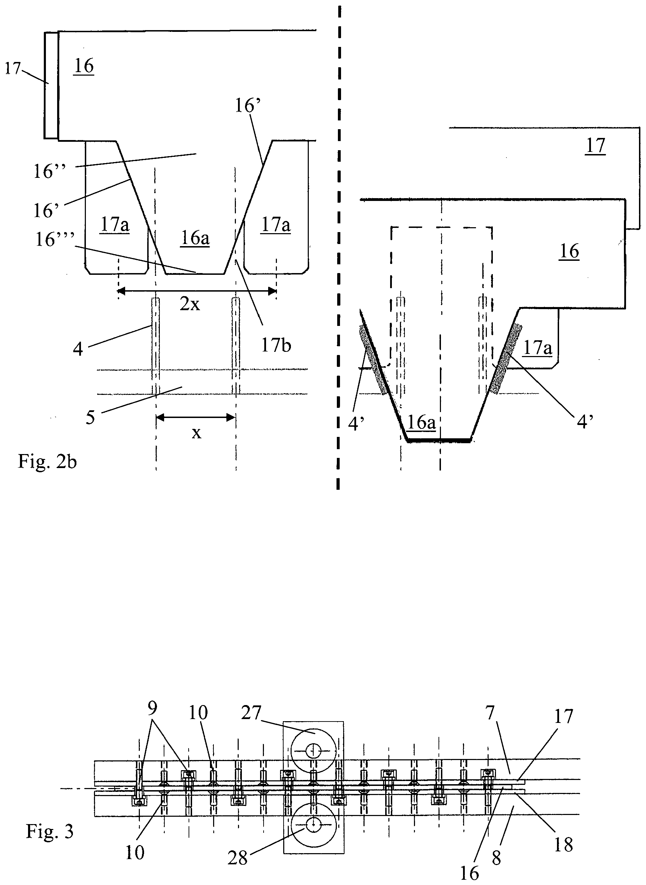

In Fig. 2 ist eine schematische Vorderansicht der Trennvorrichtung 1 aus Fig. 1 mit einem zu durchtrennenden Gitterrost 3 dargestellt. Die Trennvorrichtung 1 befindet sich in Grundstellung.
Der Gitterrost 3 liegt dabei auf dem Gegenhalter 2 bzw. der Gitterrostauflage auf. Der Gitterrost 3 besteht dabei aus im Abstand parallel verlaufenden, aus Flachstahlbändern gebildeten Tragstäben 4 und aus senkrecht zu diesen verlaufenden Querstäben 5.
Die Querstäbe 5 werden aus Bandstahl gefertigt oder bestehen aus gezogenem und tordiertem oder rundem Draht. Der Gitterrost 3 liegt dabei mit den Querstäben 5 nach unten auf der Gitterrostauflage bzw. dem Gegenhalter 2 auf. In Fig. 2 erkennt man den Aufbau der kammartigen Anschlagelemente 7', 8' der Messerblöcke 7 und 8. Die Vorlaufmesser 17, 18 haben kammartige Schneidezähne 17a und 18a zwischen denen sich jeweils Zahnlücken 17b und 18b befinden. Der jeweilige Abstand der Schneidezähne 17a und 18a ist dabei so bemessen, das in jede zweite Gitterrostmasche entlang der Schnittlinie jeweils ein Schneidezahn 17a und 18a eintaucht. Die kammartigen Anschlagelemente 7', 8' der Messerblöcke 7 und 8 tauchen hier in jede Masche entlang der Schnittlinie ein.

Die Schneidezähne 17a des ersten Vorlaufmessers 17 sind zumindest in der Grundstellung mit den Schneidezähnen 18a des zweiten Vorlaufmessers 18 deckungsgleich.
Der Abstand der Zahnlücken 17b bzw. 18b untereinander entspricht dem doppelten Abstand der Tragstäbe 4. Dies ist notwendig, da für den Schneidvorgang die Tragstäbe 4 durch die Zahnlücken 17b und 18b aufgenommen werden.
Das Trennmesser 16 ist zwischen den beiden Vorlaufmessern 17 und 18 angeordnet, es hat ebenfalls kammartige Schneidezähne 16a.
Das Messerpaket wird über die Distanzelemente 9 zusammengehalten. Damit die einzelnen Messer 16, 17 und 18 dennoch unabhängig voneinander abgesenkt werden können, weisen sie Schlitze auf, in denen die Distanzelemente 9 gleiten können.

In Figur 2a ist eine Einzeldarstellung des Trennmessers 16 und ein zu durchtrennender Gitterrost 3 dargestellt. Die Schneidezähne 16a haben in Bezug auf eine Senkrechte zur Gitterrostebene (entspricht einer vertikalen Linie auf dem Blatt) schräg verlaufende Schneidflanken 16'. Die Schneidezähne 16a sind also an ihrer Basis 16'' breiter als an ihrer Spitze 16'". Dadurch wirken beim Schnitt die kammartigen Schneidezähne 17a und 18a der Vorlaufmesser 17 und 18 mit den Schneidezähnen 16a des Trennmessers 16 scherenartig zusammen. Die Schneidflanken 16' der Schneidezähne 16a können so ein Teilstück 4' (in Figur 2b dargestellt) aus den einzelnen Tragstäben 4 herausschälen bzw. heraustrennen.
Die Schlitze 11 im Trennmesser 16 erlauben ein Gleiten der Distanzelemente 9 beim unabhängigen Absenken der Messer 16, 17, 18.

Fig. 2b zeigt eine Detailansicht des Vorlaufmessers 17 und des Trennmessers 16 vor und nach dem Schnitt der Tragstäbe 4. Auf der linken Seite der Fig. 2b sind die Messer 16 und 17 in ihrer Grundstellung dargestellt. Das zweite Vorlaufmesser 18 ist zur besseren Übersichtlichkeit nicht dargestellt. Auf der rechten Seite der Fig. 2b sind die Messer 16 und 17 in ihrer Position unmittelbar nach einem Schnitt dargestellt. In Fig. 2b erkennt man deutlich, dass der Abstand der Schneidezähne 17a des Vorlaufmessers 17 dem doppelten Abstand x der Tragstäbe 4 entspricht. Dies gilt natürlich auch für den Abstand der Schneidezähne 18a des anderen Vorlaufmessers 18. Die Abstände der Schneidezähne 17a und 18a entsprechen also der doppelten Maschenteilung x der Tragstäbe 4, also 2x. Die Maschenteilung x ist dabei der Abstand von Mitte zu Mitte Tragstab 4. Der Abstand von Mitte zu Mitte der Schneidezähne 16a des Trennmessers 16 entspricht ebenso der doppelten Maschenteilung, also 2x. Die Schneidezähne 17a und 18a der Vorlaufmesser 17 und 18 sind in Bezug auf die Schneidezähne 16a des Trennmessers 16 um eine Maschenteilung versetzt.

Die Breite der Schneidezähne 17a und 18a entspricht ungefähr der Maschenweite. Die Maschenweite ist dabei der lichte Abstand zwischen den Tragstäben 4. Dadurch wirken beim Durchtrennen der Tragstäbe 4 die Schneidezähne 17a und 18a als Gegenhalter für die Tragstäbe 4. Durch die Breite und den Abstand der Schneidezähne 17a und 18a ergibt sich auch die Breite der Zahnlücken 17b und 18b. Die Breite einer Zahnlücke 17b bzw. 18b ist ausreichend, um genau zwei parallele Tragstäbe 4 aufnehmen zu können.
Die Breite der Spitze 16''' der Schneidezähne 16a des Trennmessers 16 ist geringer als die Maschenweite der Tragstäbe 4 und die Basis 16" der Schneidezähne 16a ist breiter als die Maschenweite. Für das Durchtrennen der Tragstäbe 4 des Gitterrostes 3 werden zuerst die beiden Vorlaufmesser 17 und 18 in den Gitterrost 3 abgesenkt, sodass jeweils zwei Tragstäbe 4 zwischen die Zahnlücken 17b und 18b gleiten. Danach wird das Trennmesser 16 abgesenkt. Die schrägen Schneidflanken 16' des Trennmessers 16 wirken dabei mit den Schneidflanken der Vorlaufmesser 17 und 18 scherenartig zusammen. Dadurch wird ein Teilstück 4' mit einem Doppelschnitt aus den jeweiligen Tragstäben 4 herausgeschält und die Tragstäbe 4 so durchtrennt.
In Fig. 3 ist eine geschnittene Draufsicht entlang der Linie A-A in Fig. 2 dargestellt. Man erkennt darauf gut, wie die drei Messer 16, 17 und 18 durch die Distanzelemente 9 zusammengehalten werden. Diese Distanzelemente 9, die beispielsweise als Passschrauben ausgeführt sein können, schränken dabei nicht die unabhängige Beweglichkeit der Messer 16, 17, 18 senkrecht zur Gitterrostebene ein.
Die Distanzelemente 9 sind dabei jeweils abwechselnd in die Messerblöcke 7 und 8 der Vorlaufmesser 17 und 18 geschraubt. Die Distanzelemente 9, die in den Messerblock 7 des Vorlaufmessers 17 geschraubt sind, können in Schlitzen 11 des Trennmessers 16 und des anderen Vorlaufmessers 18 gleiten. Durch den Kopf am jeweiligen Ende der Distanzelemente 9 werden die Messer 16, 17 und 18 zusammengehalten. Die Messerblöcke 7 bzw. 8 haben entsprechende schlitzförmige Ausnehmungen für die Köpfe der Distanzelemente 9, die mit dem gegenüberliegenden Messerblock 8 bzw. 7 verbunden sind. Dadurch können die Messer 16, 17 und 18 unabhängig voneinander abgesenkt werden. Die Vorlaufmesser 17 und 18 sind über Befestigungsschrauben 10 an ihren jeweiligen Messerblöcken 7 bzw. 8 befestigt.

Fig. 4 zeigt eine weitere Ausführungsform der Trennvorrichtung 1. Ihr Aufbau entspricht im Wesentlichen dem Aufbau der Trennvorrichtung 1 aus Figur 1 nur sind in Fig. 4 die Messerblöcke 7 und 8 etwas anders ausgeführt und die Hydraulikzylinder zur Betätigung der Vorlaufmesser 17 und 18 sind nicht dargestellt. Die Messeblöcke 7 und 8 weisen auch hier kammartige Anschlagelemente 7' und 8' auf, durch die die Messerblöcke 7 und 8 beim Schnitt in den Ausnehmungen 2' des Gegenhalters 2 fixiert werden. Durch diese Fixierung kann sichergestellt werden, dass die Messer 16, 17 und 18 eng aneinander gleiten und so die Schneidezähne 16a, 17a und 18a scherenartig zusammenwirken können.

Anhand der Trennvorrichtung 1 aus Figur 4 wird nun der Trennvorgang eines Gitterrostes 3 beispielhaft erläutert. Selbstverständlich erfolgt ein Trennvorgang mit der Trennvorrichtung 1 aus Fig. 1 auf die gleiche Art und Weise. Figur 4 zeigt dabei die Trennvorrichtung 1 in ihrer Grundstellung. Unterhalb der Messer 16, 17 und 18 befindet sich dabei der zu durchtrennende Gitterrost 3 mit Tragstäben 4 und Querstäben 5.
Der Gitterrost 3 wurde dabei beispielsweise über einen Rollgang, der der Trennvorrichtung 1 vorgelagert ist, z.B. manuell bis zum Anschlag eingeschoben und in die richtige Position gebracht. Der Gitterrost 3 wird dabei mit den Querstäben 5 nach unten aufgelegt.

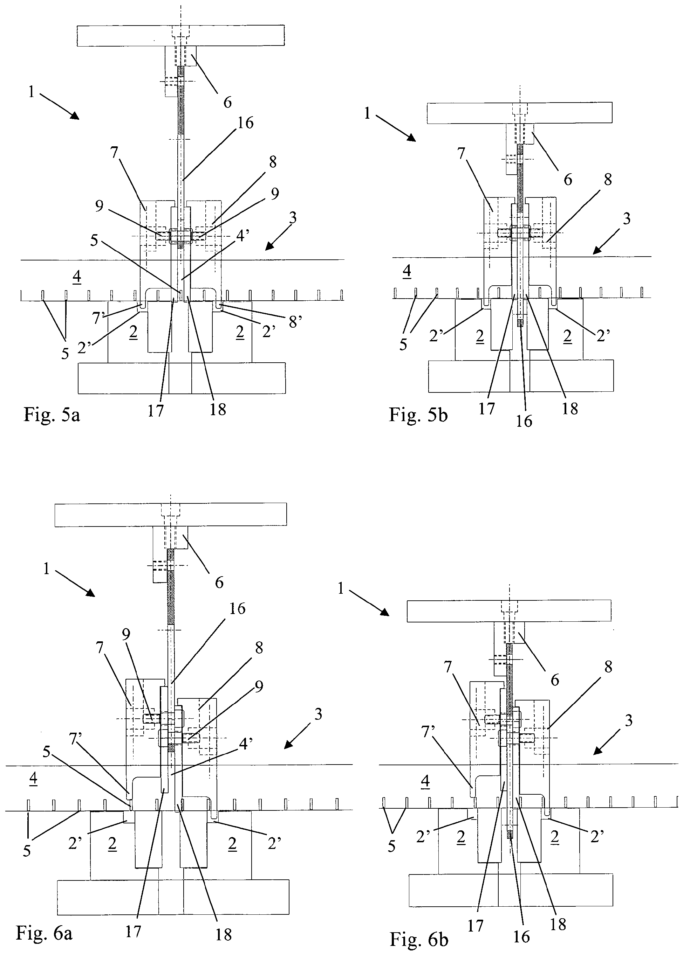

In den Fig. 5a und 5b ist eine Situation dargestellt, bei der die Tragstäbe 4 genau an den Kreuzungspunkten mit einem Querstab 5 durchtrennt werden.

In einem ersten Schritt werden die beiden Vorlaufmesser 17 und 18 nach unten gedrückt, also in eine Richtung senkrecht zur Gitterrostebene. Dies ist in Fig. 5a dargestellt. Die Vorlaufmesser 17 und 18 können dabei unabhängig voneinander mit druckbegrenzten Hydraulikzylindern 27, 28 (nur in Figur 1 und 3 dargestellt) nach unten gedrückt werden. Die Tragstäbe 4 werden dabei durch die Zahnlücken 17b und 18b (in Figur 2 gut ersichtlich) in den Vorlaufmessern 17 und 18 aufgenommen. Eine Zahnlücke 17b bzw. 18b nimmt dabei jeweils zwei parallele Tragstäbe 4 auf. Die Tragstäbe 4 werden dabei auch von dem kammartigen unteren Bereich der Messerblöcke 7 und 8 umschlossen.

Die Messerblöcke 7 und 8 werden durch ihre Anschlagelemente 7' und 8' und durch die Ausnehmungen 2' im Gegenhalter 2 fixiert. Dadurch können die Vorlaufmesser 17, 18 beim Schnitt nicht seitlich weggleiten.

In einem zweiten Schritt, dem eigentlichen Schnittvorgang, wird das Trennmesser 16 nach unten gedrückt, es befindet sich dabei in direktem Kontakt mit den beiden abgesenkten Vorlaufmessern 17 und 18. Das Trennmesser 16 schert dabei mit den beiden Vorlaufmessern 17 und 18 durch einen Doppelschnitt die Tragstäbe 4 ab, dabei wird aus jedem Tragstab 4 ein Teilstück 4' mit der Breite des Trennmessers 16 herausgeschält. Im vorliegenden Beispiel wird auch der Querstab 5 durch das Trennmesser 16 aus dem Gitterrost 3 herausgeschoben bzw. herausgetrennt. Fig. 5b zeigt die Position des Trennmessers 16 unmittelbar nach dem Schnitt. Der beim Trennen entstehende Abfall, also hier die Teilstücke 4' und der Querstab 5 werden nach unten aus der Trennvorrichtung 1 abgeführt.

Die Arbeitszylinder bzw. Hydraulikzylinder 27 und 28 (nur in Figur 1 und 3 dargestellt) können auch direkt oder indirekt mit dem Messerblock 6 verbunden sein. Beim Absenken des Messerblocks 6 werden dann die ausgefahrenen Kolben wieder in die Hydraulikzylinder 27 und 28 hineingeschoben.

In den Fig. 6a und 6b ist eine Situation dargestellt, bei der die Tragstäbe 4 zwischen den Kreuzungspunkten mit einem Querstab 5 durchtrennt werden. In Fig. 6a ist wieder der erste Schritt dargestellt, die Vorlaufmesser 17 und 18 befinden sich also bereits in ihrer abgesenkten Position. Dabei erkennt man, dass der erste Messerblock 7 nicht völlig abgesenkt werden kann, da sein Anschlagelement 7' genau auf einen Querstab 5 trifft. Der Tragstab 4 wird also nicht vollständig durch die Zahnlücken 17b (in Figur 2 und 2b gut erkennbar) des Vorlaufmessers 17 aufgenommen und der Messerblock 7 wird nicht durch die Ausnehmung 2' fixiert. Dies ist jedoch nicht weiter kritisch, da die Distanzelemente 9 dafür sorgen, dass das Messerpaket 16, 17, 18 hinreichend stark zusammengehalten wird. Es ist auch nicht weiter kritisch, dass die Schneidezähne 17a des Vorlaufmessers 17 nicht über die gesamte Höhe der Tragstäbe 4 mit den Schneidezähnen 16a des Trennmessers 16 scherenartig zusammenwirken, der untere Bereich der Tragstäbe 4 wird bei herkömmlichen Gitterrosten 3 trotzdem zuverlässig durch das Trennmesser 16 durchtrennt.

Eine ähnliche Situation ergibt sich, wenn das Vorlaufmesser 17 selbst direkt auf einen Querstab 5 trifft, auch dann kann das Vorlaufmesser 17 nicht ganz abgesenkt werden. Analoges gilt natürlich auch für das andere Vorlaufmesser 18 bzw. den anderen Messerblock 8 und dessen Anschlagelement 8'.

In Fig. 6b ist der zweite Schritt des Trennvorganges dargestellt, das Trennmesser 16 befindet sich in abgesenkter Position. Da hierbei nun der Schnitt zwischen den Querstäben 5 erfolgt, fällt kein Querstab 5 als Abfall an, sondern nur die herausgeschälten Teilstücke 4' der Tragstäbe 4.

Damit die herausgeschälten Teilstücke 4' immer zuverlässig aus der Trennvorrichtung 1 abtransportiert werden können, ist es auch denkbar, dass hierzu eine eigene Austragsvorrichtung vorgesehen ist. Es kann sich dabei um eine kammartige Vorrichtung handeln, die in einer Parallelebene zur Gitterrostebene angeordnet ist und die in einer Richtung parallel zu den Tragstäben 4 bewegbar ist. Nach dem eigentlichen Schnitt, kann dann diese Vorrichtung unterhalb des Gitterrostes 3 zwischen die überstehenden Schneidezähne 16a des abgesenkten Trennmessers 16 geschoben werden. Die herausgeschälten Teilstücke 4' können so vom Trennmesser 16 weggeschoben werden.

Die in den Zeichnungen dargestellten Ausführungsformen stellen lediglich eine bevorzugte Ausführung der Erfindung dar. Die Erfindung umfasst auch andere Ausführungsformen, bei denen beispielsweise die Messer 16, 17 und 18 unterhalb des horizontal aufliegenden Gitterrostes 3 angeordnet sind, sodass die Schneidbewegung des Trennmessers 16 und der Vorlaufmesser 17 und 18 nicht von oben nach unten sondern von unten nach oben durchgeführt wird. Hierfür muss der Gitterrost 3 mit obenliegenden Querstäben 5 in die Trennvorrichtung eingeschoben werden. Der Gegenhalter 2 ist bei dieser Ausführungsform dann oberhalb des Gitterrostes 3 angeordnet.

## Patentansprüche

1. Vorrichtung (1) zum Durchtrennen zueinander paralleler Tragstäbe (4) eines Gitterrostes (3), der aus Tragstäben (4) und quer dazu verlaufenden Querstäben (5) besteht, mit einem Messerblock (6), an dem ein parallel zu den Querstäben (5) verlaufendes Trennmesser (16) mit kammartigen Schneidezähnen(16a) vorgesehen ist, wobei die Schneidezähne (16a) in Bezug zur Gitterrostebene schräg verlaufende Schneidflanken (16') aufweisen, sodass die Schneidezähne (16a) an ihrer Basis (16'') breiter sind als an ihrer Spitze (16"'), **dadurch gekennzeichnet, dass** die Vorrichtung (1) einen Gegenhalter (2) aufweist, wobei der Gitterrost (3) zwischen Trennmesser (16) und Gegenhalter (2) zuführbar ist, und dass beidseitig des Trennmessers (16) Vorlaufmesser (17, 18) mit kammartigen Schneidezähnen (17a, 18a) und Zahnlücken (17b, 18b) zur Aufnahme der Tragstäbe (4) angeordnet sind, wobei zum Durchtrennen der Tragstäbe (4) die beiden Vorlaufmesser (17, 18) in eine Richtung senkrecht zur Gitterrostebene hin bewegbar sind, sodass die Tragstäbe (4) durch die Zahnlücken (17b, 18b) der Vorlaufmesser (17, 18) aufnehmbar sind, und wobei das Trennmesser (16) ebenfalls in eine Richtung senkrecht zur Gitterrostebene hin bewegbar ist, sodass für die Durchtrennung der Tragstäbe (4) die Schneidezähne (16a) des Trennmessers (16) mit den Schneidezähnen (17a, 18a) der beiden Vorlaufmesser (17, 18) scherenartig zusammenwirken.

2. Trennvorrichtung nach Anspruch 1, **dadurch gekennzeichnet, dass** die beiden Vorlaufmesser (17, 18) jeweils an Messerblöcken (7, 8) befestigt sind.

3. Trennvorrichtung nach einem der Ansprüche 1 oder 2, **dadurch gekennzeichnet, dass** die jeweilige Senkrechte auf die Schneidflanken (16') der Schneidezähne (16a) des Trennmessers (16) in Bezug auf eine Senkrechte zur Trennmesserebene nicht rechtwinkelig steht.

4. Trennvorrichtung nach Anspruch 2 oder nach Anspruch 3 in Kombination mit Anspruch 2, **dadurch gekennzeichnet, dass** Anschlagelemente (7', 8') an den Messerblöcken (7, 8) der Vorlaufmesser (17, 18) vorgesehen sind, die während des Trennvorgangs durch Ausnehmungen (2') im Gegenhalter (2) fixierbar sind.

5. Verfahren zum Durchtrennen zueinander paralleler Tragstäbe (4) eines Gitterrostes (3), der aus Tragstäben (4) und quer dazu verlaufenden Querstäben (5) besteht, mit einer Vorrichtung nach einem der Ansprüche 1 bis 4, wobei in einem ersten Schritt die beiden Vorlaufmesser (17, 18) in eine Richtung senkrecht zur Gitterrostebene in den Gitterrost (3) hineinbewegt werden, sodass die Zahnlücken (17b, 18b) der Vorlaufmesser (17, 18) die Tragstäbe (4) zumindest teilweise aufnehmen und wobei in einem zweiten Schritt auch das Trennmesser (16) in eine Richtung senkrecht zur Gitterrostebene in den Gitterrost (3) hineinbewegt wird, wobei die Schneidezähne (16a) des Trennmessers (16) mit den Schneidezähnen (17a, 18a) der beiden Vorlaufmesser (17, 18) scherenartig zusammenwirken, sodass dadurch aus den einzelnen Tragstäben (4) jeweils ein Teilstück (4') herausgeschält wird.

6. Verfahren nach Anspruch 5, **dadurch gekennzeichnet, dass** die beiden Vorlaufmesser (17, 18) jeweils an Messerblöcken (7, 8) befestigt sind, und dass die Messerblöcke (7, 8) Zahnlücken aufweisen, wobei die Breite der Zahnlücken im Wesentlichen der Breite der zu durchtrennenden Tragstäbe (4) entspricht.

7. Verfahren nach Anspruch 5 oder 6, **dadurch gekennzeichnet, dass** die Breite der Schneidezähne (17a, 18a) der Vorlaufmesser (17, 18) im Wesentlichen der Maschenweite des Gitterrostes (3) entspricht, wobei die Schneidezähne (17a, 18a) jeweils in jede zweite Masche des Gitterrostes (3) einführt werden.

8. Verfahren nach einem der Ansprüche 5 bis 7, **dadurch gekennzeichnet, dass** der Gitterrost (3) über einen Rollengang der Trennvorrichtung (1) in einer horizontalen Ebene zugeführt wird und dass die Schneidbewegung der Vorlaufmesser (17, 18) und des Trennmessers (16) in vertikaler Richtung von oben nach unten oder von unten nach oben durchgeführt wird.

9. Verfahren nach einem der Ansprüche 5 bis 8, **dadurch gekennzeichnet, dass** die Tragstäbe (4) genau an Kreuzungspunkten mit dem Querstab (5) durchtrennt werden, sodass der Querstab (5) durch das Trennmesser (16) aus dem Gitterrost (3) herausgetrennt wird.

10. Verfahren nach einem der Ansprüche 5 bis 9, **dadurch gekennzeichnet, dass** die Vorlaufmesser (17, 18) während des Schneidvorganges durch Ausnehmungen (2) im Gegenhalter (2) fixiert werden.

11. Verfahren nach einem der Ansprüche 5 bis 10, **dadurch gekennzeichnet, dass** die Vorlaufmesser (17, 18) und das Trennmesser (16) mit Hilfe von Hydraulikzylindern (27, 28) bewegt werden.

## Claims

1. A Device (1) for cutting parallel bearing bars (4) in a grating (3) consisting of bearing bars (4) and cross bars (5) arranged perpendicular to the bearing bars (4), comprising a knife block (6), which is provided with a cutting knife (16) arranged in parallel to the cross bars (5) with serrated cutting teeth (16a), where the cutting teeth (16a) have diagonally-running cutting edges (16') in relation to the grating plane so that the cutting teeth (16a) are broader at their bases (16") than at their tops (16'''), **characterized in that** the device (1) comprises a counter-holder (2), with the grating (3) being suitable for feeding between the cutting knife (16) and the counter-holder (2), and **in that** preliminary knives (17, 18) with serrated cutting teeth (17a, 18a) and spaces (17b, 18b) between the teeth in which to receive the bearing bars (4) are arranged on both sides of the cutting knife (16), with the two preliminary knives (17, 18) being movable in one direction perpendicular to the grating plane for cutting the bearing bars (4) so that the bearing bars (4) can be introduced through the spaces (17b, 18b) between the teeth of the preliminary knives (17, 18), and the cutting knife (16) also being movable in one direction perpendicular to the grating plane so that the cutting teeth (16a) of the cutting knife (16) interact scissor-like with the cutting teeth (17a, 18a) of the two preliminary knives (17, 18) for cutting the bearing bars (4).

2. Cutting device according to Claim 1, **characterized in that** each of the two preliminary knives (17, 18) is attached to knife blocks (7, 8).

3. Cutting device according to one of Claims 1 or 2, **characterized in that** each of the perpendiculars to the cutting edges (16') of the cutting teeth (16a) on the cutting knife (16) is not right-angled in reference to a perpendicular to the cutting knife plane.

4. Cutting device according to Claim 2 or according to Claim 3 in combination with Claim 2, **characterized in that** stop elements (7', 8') are arranged at the knife blocks (7, 8) of the preliminary knives (17, 18), which elements can be fixed in recesses (2') in the counter-holder (2) during the cutting process.

5. A Process for cutting parallel bearing bars (4) in a grating (3) consisting of bearing bars (4) and cross bars (5) arranged perpendicular to the bearing bars (4), comprising a device according to one of Claims 1 to 4, where in a first step the two preliminary knives (17, 18) are moved into the grating (3) in one direction perpendicular to the grating plane so that the bearing bars (4) are at least partly introduced into the spaces (17b, 18b) between the teeth of the preliminary knives (17, 18), and, in a second step, also the cutting knife (16) is moved into the grating (3) in one direction perpendicular to the grating plane, whereby the cutting teeth (16a) of the cutting knife (16) interact scissor-like with the cutting teeth (17a, 18a) of the two preliminary knives (17, 18) so that a part (4') is extracted from each single bearing bar (4).

6. Process according to Claim 5, **characterized in that** each of the two preliminary knives (17, 18) is attached to knife blocks (7, 8) and that the knife blocks (7, 8) have spaces between the teeth, whose width corresponds essentially to the width of the bearing bars (4) that are to be cut.

7. Process according to Claim 5 or 6, **characterized in that** the width of the cutting teeth (17a, 18a) of the preliminary knives (17, 18) corresponds essentially to the mesh size of the grating (3), with the cutting teeth (17a, 18a) being introduced into every second mesh in the grating (3).

8. Process according to one of Claims 5 to 7, **characterized in that** the grating (3) is fed to the cutting device (1) via a roller conveyor in a horizontal plane and that the cutting movement of the preliminary knives (17, 18) and the movement of the cutting knife (16) takes place vertically from top to bottom or from bottom to top.

9. Process according to one of Claims 5 to 8, **characterized in that** the bearing bars (4) are cut precisely at their intersections with the cross bars (5) so that the cross bar (5) is cut out from the grating (3) by the cutting knife (16).

10. Process according to one of Claims 5 to 9, **characterized in that** the preliminary knives (17, 18) are fixed by means of recesses (2') in the counter-holder (2) during the cutting process.

11. Process according to one of Claims 5 to 10, **characterized in that** the preliminary knives (17, 18) and the cutting knife (16) are moved with the help of hydraulic cylinders (27, 28).

## Revendications

1. Dispositif (1) de tronçonnage de barres porteuses (4) parallèles dans une grille (3) comportant des barres porteuses (4) et des barres transversales (5) disposées verticalement aux barres porteuses (4), comprenant un bloc à lames (6), qui est équipé d'une lame de tronçonnage (16) disposée parallèlement aux barres transversales (5) ayant des dents coupantes (16a) en forme de peigne, où les dents de tronçonnage (16a) ont des bords coupants (16') disposés diagonalement par rapport au plan de la grille, de manière à ce que les dents coupantes (16a) soient plus larges à ses bases (16'') qu'à ses pointes (16'''), **caractérisé en ce que** le dit dispositif (1) comporte un contre-appui (2), la grille (3) étant convenable à l'avancement entre la lame de tronçonnage (16) et le contre-appui (2), et **en ce que** les lames préliminaires (17, 18) qui sont équipées de dents (17a, 18a) en forme de peigne et des espaces (17b, 18b) entre les dents servant à recevoir les barres porteuses (4) sont disposés des deux côtés de la lame de tronçonnage (16), les deux lames préliminaires (17, 18) étant amovibles à un sens perpendiculaire au plan de la grille pour le tronçonnage des barres porteuses (4) de manière à ce que les barres porteuses (4) puissent être introduites dans les espaces (17b, 18b) entre les dents des lames préliminaires (17, 18), et la lame de tronçonnage (16) étant également amovible à un sens perpendiculaire à la grille de manière à ce que les dents coupantes (16a) de la lame de tronçonnage (16) interagissent avec les dents coupantes (17a, 18a) des deux lames préliminaires (17, 18) à la façon d'un ciseau afin de couper les barres porteuses (4).

2. Dispositif de tronçonnage selon la revendication 1, **caractérisé en ce que** chacune des deux lames préliminaires (17, 18) est attachée à des blocs à lames (7, 8).

3. Dispositif de tronçonnage selon l'une des revendications 1 ou 2, **caractérisé en ce que** chacune des verticales aux bords coupants (16') des dents coupantes (16a) de la lame de tronçonnage (16) n'est pas perpendiculaire à une verticale au plan de la lame de tronçonnage.

4. Dispositif de tronçonnage selon la revendication 2 ou selon la revendication 3 en combinaison avec la revendication 2, **caractérisé en ce que** des éléments d'arrêt (7', 8') sont disposes aux blocs à lames (7, 8) des lames préliminaires (17, 18), les dits éléments pouvant être fixés dans des encoches (2') dans le contre-appui (2) pendant le procédé de tronçonnage.

5. Procédé de tronçonnage de barres porteuses parallèles (4) dans une grille (3) comportant des barres porteuses (4) et des barres transversales (5) disposées verticalement aux barres porteuses (4), comportant un dispositif selon l'une des revendications 1 à 4, où, dans une première étape, les deux lames préliminaires (17, 18) se trouvent alimentées dans la grille (3) à un sens perpendiculaire au plan de la grille de manière à ce que les barres porteuses (4) soient au moins partiellement introduites dans les espaces (17b, 18b) entre les dents des lames préliminaires (17, 18), et dans une seconde étape, la lame de tronçonnage (16) se trouve avancée dans la grille (3) à un sens perpendiculaire au plan de la grille, les dents de tronçonnage (16) de la lame de tronçonnage interagissant ainsi avec les dents de tronçonnage (17a, 18a) des deux lames préliminaires (17, 18) à la façon d'un ciseau, de manière à ce qu'une partie (4') soit extraite de chaque barre porteuse individuelle (4).

6. Procédé selon la revendication 5, **caractérisé en ce que** chacune des lames préliminaires (17, 18) est attachée aux blocs à lames (7, 8) et que les blocs à lames (7, 8) comportent des espaces entre les dents dont la largeur correspond essentiellement à la largeur des barres porteuses (4) lesquelles doivent être coupées.

7. Procédé selon la revendication 5 ou 6, **caractérisé en ce que** la largeur des dents coupantes (17a, 18a) des lames préliminaires (17, 18) correspond essentiellement à la largeur des mailles de la grille (3), les dents coupantes (17a, 18a) étant introduites dans chaque autre maille de la grille (3).

8. Procédé selon l'une des revendications 5 à 7, **caractérisé en ce que** la grille (3) est alimentée au dispositif de tronçonnage (1) à l'aide d'un convoyeur à rouleaux à un plan horizontal et que le mouvement des lames préliminaires (17, 18) et le mouvement de la lame de tronçonnage (16) ont lieu verticalement de haut en bas ou de bas en haut.

9. Procédé selon l'une des revendications 5 à 8, **caractérisé en ce que** les barres porteuses (4) se trouvent coupées précisément à leurs intersections avec les barres transversales (5) de manière à ce que la barre transversale (5) soit découpée de la grille (3) par la lame de tronçonnage (16) .

10. Procédé selon l'une des revendications 5 à 9, **caractérisé en ce que** pendant le procédé de tronçonnage, les lames préliminaires (17, 18) sont fixées dans le contre-appui (2) moyennant des encoches (2').

11. Procédé selon l'une des revendications 5 à 10, **caractérisé en ce que** les lames préliminaires (17, 18) et la lame de tronçonnage (16) sont actionnées à l'aide de vérins hydrauliques (27, 28).
